Europäisches Patentamt

European Patent Office

Office européen des brevets

(11) Publication number : **0 494 742 A1**

# (12) EUROPEAN PATENT APPLICATION

(21) Application number : **92300073.1**

(22) Date of filing : **06.01.92**

(51) Int. Cl.$^5$ : **B01D 29/03, B01D 29/56, B22C 9/08**

(30) Priority : **10.01.91 GB 9100519**

(43) Date of publication of application :
**15.07.92 Bulletin 92/29**

(84) Designated Contracting States :
**CH DE ES FR GB IT LI**

(71) Applicant : **FOSECO INTERNATIONAL LIMITED**
**285 Long Acre**
**Nechells Birmingham B7 5JR (GB)**

(72) Inventor : **Stötzel, Reinhard**
**Nonnenfettweide 20**
**W-4280 Borken (DE)**
Inventor : **Trinkl, Gerd**
**Grüssauerstr. 11**
**W-4280 Borken (DE)**
Inventor : **Schlüter, Rudolf**
**Wesekerstr. 10**
**W-4282 Velen-Ramsdorf (DE)**

(74) Representative : **Moore, John Hamilton**
**Foseco Holding International Limited Group**
**Patents Department 285 Long Acre Nechells**
**Birmingham B7 5JR (GB)**

(54) **Filters.**

(57)   The invention provides a ceramic filter of improved uniformity. The filter is made by coating a destructible pattern with a ceramic slurry, firing the coated pattern to remove the pattern and consolidate the ceramic, the pattern being in the form of a multiplicity of layers (10, 11) which are adhered together to form cavities (14) and channels (15) of uniform shape and distribution, adjacent layers being offset to provide changes of direction for fluid flowing through the filter.

FIG. 4

EP 0 494 742 A1

This invention relates to filters and, more particularly, to filters for the removal of undesired particles from molten metals or for hot gas filtration and vehicle exhausts.

For convenience the invention will be more specifically described below with reference to filtration of molten metals although it will be understood that the constructions described may have wider applicability as mentioned above.

With the growing demand for higher qualities of castings and other metal shapes, undesirable non-metallic inclusions in the liquid metal must be eliminated. These inclusions are principally particles of slag and non-oxide particles. If not eliminated, after solidification these non-metallic inclusions produce an undesirable reduction in the mechanical properties of the solidified metal.

For lowering the weight of castings and other shapes, as e.g. sheets, there is a continuing need to reduce their wall thickness. With this trend the removal of inclusions is becoming more and more important, because they produce holes and irregularities in the metallic structure of the casting and other metallic shapes. Therefore, the removal of these inclusions from the liquid metal by suitable and reliable filtration is a growing demand in the industry.

The removal of inclusions from liquid metals is based on the filtration principle where the flow of liquid metal containing the undesired inclusions is changed by different speeds and different directions while passing through the filter body. The surface of the internal filter walls in addition must be able to catch inclusions out of the passing liquid metal stream by having an uneven surface and a suitable surface tension of the filter material.

It is known to use cloth filters for the filtration of liquid metal. However, only coarse inclusions are held back by the size of the holes in the weave. The accumulation of the coarse particles in front of the cloth filter also helps to hold back the particles. Nevertheless, it must be expected that only particles bigger than the size of the holes in the woven structure are held back and filtered and that the smaller inclusions will pass through this cloth filter.

Ceramic sieve filters are also well known. These have a similar filtration efficiency to the cloth filters. In most cases these ceramic sieve filters have channels with diameters bigger than the holes in the cloth filters. With this type of filter, the speed of the metal flow is increased passing through its channels. This results in smaller inclusions being flushed through the sieve filter.

For the removal of coarse and very small inclusions from the liquid metal, ceramic foam filters are used. Due to the different pore sizes of the ceramic foam filter, coarse and small inclusions are held back in front of the filter. But due to the varying speed and direction of the flow inside the filter smaller inclusions are separated inside the filter and kept back by a suitable movement of the liquid metal flow in the pores of the filter and by the adhesion of the walls.

Ceramic foam filters are well known and are produced by coating the walls of a suitable foam with a suitable ceramic material of a suitable viscosity. For the impregnation step the foams may be compressed in a bath of slurry of the ceramic material. The thickness of the coated slurry is defined by the properties of the slurry and the method of pressing the foam in the slurry, as e.g. by rolls. The impregnated foam is kilned where the ceramic bond is produced. During the kilning the foam is burned off.

The ceramic structure left is thin ceramic bridges round a network of pores. These bridges are hollow, i.e. they have bores through their centres where the foam was burned during kilning.

However, the quality of the ceramic foam filters, and in consequence the filtration efficiency, suffers by the irregularity of the foam structure and the low strength of the ceramic bridges in the filters. The irregularities are mostly dependent from the irregularities of the foam structure produced by the foaming procedure during manufacture. In addition some pores are closed due to the impregnation method, which results in varying flow from filter to filter. It is desirable to eliminate such variations due to the consequences in an automatic casting line where the cycle time is very important.

Furthermore, the ceramic foam bridges of the pores of a ceramic foam filter, and especially the coated stems in the areas where the foam has been cut, very often have an insufficient ceramic coating. Pieces of the ceramic coating can break off during transport and also during the application in liquid metal. If these pieces are found in solidified metal castings or other metal shapes the product must be scrapped due to the mechanical defects they cause.

To overcome the defects described above, a new ceramic filter body is proposed, where by defined cavities connected among each other with defined channels inside the body of the filter the flow of the liquid metals or other liquids passing the filter will be changed by speed and direction. The cavities and the channels respectively each have a defined equal geometric structure and are regularly distributed inside the filter body.

Thus, the invention in one aspect provides a filter comprising a ceramic body defining a series of substantially alike, uniform cavities joined by a series of substantially alike, uniform channels, the cavities and channels respectively being uniformly distributed through the body of the filter.

The formation and the position of the cavities and the channels can be optimised for achieving the required changes of the metal flow speed and the direction inside the filter. They also can be adjusted for different types of liquid metals as e.g. for iron and aluminium. Thus, filtration efficiency and throughflow and filter strength can all be optimised.

The shapes of the cavities can be spherical, elliptical, polyhedral or other desired shape.

They preferably have a radius or maximum diagonal of from 0.1 to 10 mm and the thickness of the walls of the cavities may be, for example, from 0.1 to 5 mm. The disposition of the cavities may be cubical or hexagonal face centred.

The cross-sections of the channels connecting the cavities may be circular, part circular, elliptical or polyogonal. They preferably have a radius or maximum diagonal of from 0.1 to 5 mm.

The preferred filter body has an open porosity of 30 - 95% and a permeability of $10^{-5}$ to $10^{-3}$ cm$^2$. It has a body shape in the form of a prism with a round, rectangular, square or other polyhedral shape top and bottom faces. The thickness of a typical filter body between the top and bottom faces is from 5 to 500 mm and its diameter, length or width may be, for example, from 10 to 1000 mm.

For the optimisation of the filtration efficiency flow models can be used.

The advantage of this filter system is to have a filter body with defined equally distributed cavities and channels. The ceramic walls have a sufficient thickness for achieving the mechanical strength in the liquid metal as required.

A filter body of the invention may be made using a pattern or negative mould formed from a material that can be dissolved, melted or burned off after it has been infiltrated and coated with a ceramic slurry. The pattern or negative mould is dipped into a suitable ceramic slurry with the aid of pressure or vacuum, if required. A thixotropic slurry may also require the application of energy, e.g. by vibration of the bath containing the slurry, in order to achieve full infiltration of the pattern and, hence, a satisfactory coating. The coating is then preferably heated, with or without a preliminary drying stage, e.g. in a kiln, to burn off the pattern and to fire the ceramic coating.

In an alternative embodiment the coated ceramic slurry may be self-hardening or hardened by gas. The pattern or negative mould may be produced from plastics material, elastomeric material paper or wax. It may be solid or hollow.

The ceramic material from which the filter is made may be any suitable ceramic composition and those compositions conventionally used to make known ceramic foam filters may conveniently be used in the present invention. Thus, the composition may, for example, be based on an alumina matrix or a silicon carbide matrix. The compositions may contain reinforcing fillers, binders, rheological agents and the like as is well known in the art. Additionally, if desired, the compositions may contain a minor proportion of reinforcing ceramic fibres, e.g. of alumina or aluminosilicate.

The pattern may be formed in two halves by deep-drawing or stamping a suitable sheet material to a shape corresponding to a half of the desired filter pattern when it is divided along the mid-plane between the top and bottom surfaces. This plane will usually be normal, i.e. at right angles, to the axial direction of the majority of the desired channels.

In a further aspect, therefore, the invention provides a pattern for a ceramic filter, the pattern being formed of a destructible material and comprising two parts joined together to define a series of substantially alike, uniform cavities joined by a series of substantially alike uniform channels, the cavities and channels respectively being uniformly distributed through the pattern.

Two such formed halves of the pattern are placed together in contact but stepped sideways to cause change of direction of flow and may be adhered or welded together to form the desired pattern. While all of the channels may be formed to extend normal to the top and bottom surfaces of the filter, i.e. in the direction of flow of the metal to be filtered, it may be desired to have some channels formed perpendicular to this direction. This can enable the transport of an inert or reactive gas during filtration to improve quality and capacity of the filtration process.

In an alternative embodiment the pattern halves may be formed by injection-moulding or pressing or may be in the form of a woven fabric, the weave pattern providing the desired cavities and channels.

It is also possible to make the pattern by adhering together three or more formed layers, i.e. the invention is not necessarily limited to the use of two pattern halves and a number of layers will normally be stacked together to the desired thickness. For example, a number of rolls of suitable woven fabric can be layered continuously, adjacent layers being sufficiently offset to provide the desired directional changes of flow in the finished product.

Suitable plastics and elastomeric materials for the formation of patterns for use in the present invention include polystyrene; polyethylene; polyvinylchloride; polypropylene; polyethylene terephthalate; polyacrylonitrile; polybutene; polymethylpentan; styrene-butadiene; styrene-acrylonitrile; acrylonitrile-butadiene-styrene; acrylonitrile-styrene-acrylicester; cellulose acetobutyrate; polymethylmethacrylate; acrylonitrile-methylmethacrylate; polybutylene terephthalate; polycarbonate; polypropyleneoxide; polysulphone; polyphenylenesulphone; polyether-sulphone and polyetherblock amide. Alternatively, non-synthetic materials e.g. cotton, may be found to be suitable.

The sheet materials may be, for example, of thickness from 0.05 to 2.0 mm.

The sheet material may be needled to provide better drying characteristics and to give a roughened surface structure to the eventual ceramic stems.

To further increase the mechanical strength of the filter in the liquid metal the filter body may be provided with an external surrounding ceramic layer directly connected with the filter structure. The variation of the dimensions is limited to the requirements during the application in the liquid metal.

The new filter can have layers with different structures of the cavities and the channels, as e.g. outside and inside, for achieving an optimum of filtration especially for a multi-stage filtration of very small inclusions.

The walls of the new filter have a ceramic material with a suitable surface tension and a surface structure for catching and holding the inclusions out of the liquid metal as required.

Embodiments of the invention are illustrated in the accompanying drawings in which:

Figure 1 is a representation in plan view showing the disposition of the cavities and channels in a pattern designed to produce a filter according to one embodiment of the invention;

Figure 2 is a section on line II - II of Figure 1;

Figure 3 shows at A and B side views, at C a plan view and at D a perspective view of the pattern layers of another embodiment of the invention; and

Figure 4 is a perspective view of a portion of a ceramic filter product of the invention.

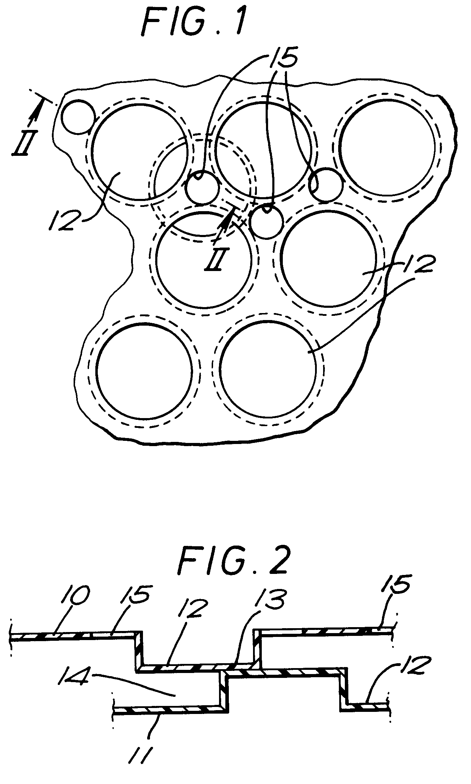

In Figures 1 and 2 plastics sheet materials 10 and 11 are formed to have a series of depressions 12 and are joined together but offset laterally, i.e. stepped sideways, at points 13. Thus, cavities 14 are formed in the pattern. The cavities are open by virtue of holes 15 cut or otherwise formed in sheets 10 and 11, to provide channels into and through the cavities. A series, e.g. six, of such holes can surround each depression in the sheets.

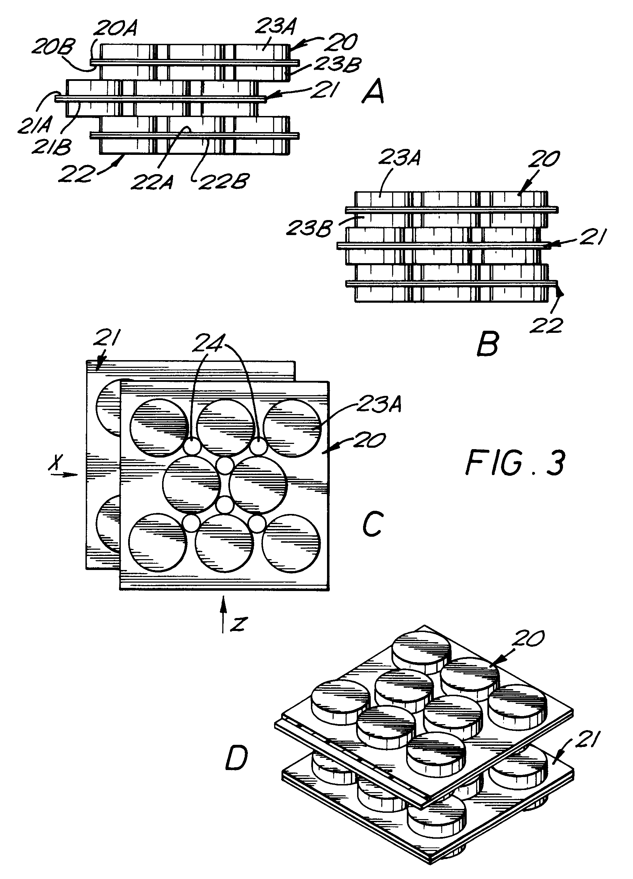

In Figure 3, a triple-layered pattern having layers 20, 21 and 22 is shown in two side views A and B taken at right angles to each other. View A corresponds to the view along arrow Z in plan view C and view B corresponds to the view along arrow X in plan view C.

Each layer 20, 21, 22 of the pattern consists of two layers of plastics sheet material 20A, 20B, 21A, 21B, 22A, 22C respectively. Each layer 20A, 20B etc. has a series of depressions 23A, 23B. Pairs of depressions 23A and 23B are juxtaposed to form a series of enclosed cavities surrounded by a double thickness web 20A, 20B of the two layers of sheet material. Each depression 23A etc. is surrounded by six equally spaced holes 24, the holes in each pair of layers 20A, 20B etc. being aligned together. This is shown in Figure 3C, only a proportion of holes 24 being shown for simplicity (Figure 3D shows a perspective view of two only of the double layers 20 and 21, holes 24 not being shown).

It will be noted that adjacent layers 20, 21, 22 are offset from each other so that enclosed cavities 23A, 23B of one layer overlap with those of an adjacent layer.

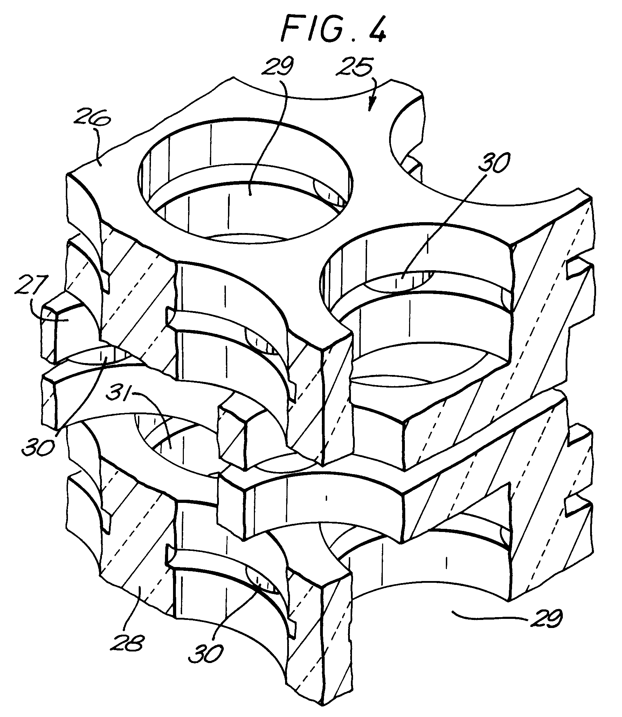

When the pattern is coated with slurry and then the resulting coated pattern is fired, a portion of the product obtained is shown in Figure 4. This is a multi-cavitied filter body 25 having offset layers 26, 27 and 28. Cavities 29 correspond to the enclosed cavities 23A, 23B of the pattern into which slurry could not penetrate. Pillars 30 correspond to holes 24. Arcuate slots 31 at the edges of cavities 29 correspond to the webs 20A, 20B etc. of the plastics sheet material.

It will be noted that cavities 29 in adjacent layers are offset so as to overlap to provide through channels 31 between adjacent layers.

## Claims

1. A pattern for a ceramic filter, comprising a destructible material having a series of cavities joined by a series of channels, characterised in that the cavities (14) and channels (15) are of substantially uniform shape and distribution, the cavities being provided in layers with adjacent layers (10, 11) being offset to provide change of direction of fluid passing through the eventual filter.

2. A pattern, according to Claim 1, characterised in that the layers (10, 11) are formed by deep-drawing, injection-moulding or press-stamping plastics sheet material and adjacent layers are adhered together.

3. A pattern, according to Claim 1, characterised in that the layers are provided in the form of a woven fabric material.

4. A pattern, according to Claim 1, 2 or 3, characterised in that the channels (15) extend substantially perpendicularly relative to the top and bottom surfaces of the pattern.

5. A pattern, according to Claim 4, characterised in that additional channels are formed substantially parallel to the top and bottom surfaces of the pattern.

6. A pattern, according to any one of the preceding claims, characterised in that the cavities and channels in layers adjacent a surface of the pattern have different dimensions to those of other layers.

7. A filter comprising a ceramic body having a series of cavities joined by a series of channels, characterised in that the cavities and channels are of substantially uniform shape and distribution, the cavities being provided in layers with adjacent layers being offset to provide change of direction of fluid passing through the filter.

8. A filter according to Claim 7, characterised in that the channels extend substantially perpendicularly relative to the top and bottom surfaces of the filter.

9. A filter according to Claim 7 or 8, characterised in that the cavities and channels in layers adjacent its top or bottom surface have different dimensions to those of other layers.

10. A method of making a ceramic filter which comprises coating a destructible pattern with a ceramic slurry, firing the coated pattern to remove the pattern and consolidate the ceramic to form a ceramic body having cavities connected by channels, characterised in that the pattern is formed by adhering together a multiplicity of layers of destructible material to provide cavities and channels of substantially uniform shape and distribution, adjacent layers being offset from each other to provide changes of direction for fluid flowing through the filter.

# FIG . 1

# FIG . 2

FIG . 3

## FIG. 4

## EUROPEAN SEARCH REPORT

**European Patent Office**

**Application Number**

EP 92 30 0073

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 165 025 (CERTECH INC.)<br><br>* abstract; claims; figures 1,21,22 *<br>--- | 1,2,4,5,<br>7,8,10 | B01D29/03<br>B01D29/56<br>B22C9/08 |
| A | DE-A-1 919 635 (UHDE F. GMBH)<br><br>* page 4, paragraph 3; figure 2 *<br>--- | 1,4,5,7,<br>8 | |
| A | FR-A-2 409 785 (ALUMINIUM SUISSE S.A.)<br>* claim 1; figures *<br>--- | 7,8 | |
| A | US-A-4 158 632 (DANTZIG ET AL.)<br>* claim 1; figures 1-3,5 *<br><br>----- | 1,3,7 | |
| | | | TECHNICAL FIELDS SEARCHED (Int. Cl.5 ) |
| | | | B01D<br>B22C<br>C22B |

The present search report has been drawn up for all claims

| Place of search | Date of completion of the search | Examiner |
|---|---|---|
| THE HAGUE | 09 APRIL 1992 | PLAKA T. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)